# EUROPÄISCHE PATENTSCHRIFT

(11) **EP 2 067 582 B1**
(45) Veröffentlichungstag und Bekanntmachung des Hinweises auf die Patenterteilung: **17.08.2011**
(21) Anmeldenummer: 07023419.0
(22) Anmeldetag: 04.12.2007
(51) Int. Cl.: B25J 15/02, B25J 15/10, F15B 15/14, F16H 25/18

(54) **Greifvorrichtung für scheibenförmige Gegenstände**
Gripping device for disk-shaped objects
Dispositif de préhension pour objets en forme de disque

(43) Veröffentlichungstag der Anmeldung: 10.06.2009
(73) Patentinhaber: Schunk GmbH & Co. KG Spann- und Greiftechnik, 74348 Lauffen am Neckar (DE)
(72) Erfinder: Hoch, Andreas, 74388 Talheim (DE); Schleusener, Tobias, 75031 Eppingen (DE)
(74) Vertreter: Bulling, Alexander

(56) Entgegenhaltungen:
- DE-A1- 4 116 399
- DE-A1- 10 114 117
- DE-U- 8 904 108
- DE-U1- 9 204 457
- GB-A- 1 174 599
- JP-A- 3 202 291
- US-A- 5 871 250

## Beschreibung

Die Erfindung betrifft eine Greifvorrichtung zum Greifen scheibenförmiger Gegenstände mit wenigstens annähernd kreisrundem Außenumfang, mit einem Grundkörper, mit relativ zum Grundkörper radial nach innen und außen verschiebbar geführten Greifklauen zur Anlage an den Außenumfang des zu greifenden Gegenstandes, wobei im Grundkörper ein axial verlaufend angeordneter Zylinder mit einem darin verschieblich geführten Kolben vorgesehen ist, der über ein die Axialbewegung des Kolbens in Radialbewegungen umwandelndes Getriebe und über mit dem Getriebe zusammenwirkende Führungsstangen mit den Greifklauen bewegungsgekoppelt ist.

Eine derartige Greifvorrichtung ist beispielsweise aus der EP 0 724 774 B1 bekannt. Bei einer derart bekannten Greifvorrichtung umfasst das Getriebe konische Spreizkörper mit Konusflächen, die an den inneren Enden der Führungsstangen angeordneten Führungskörpern zugeordnet sind, wobei der Kolben dabei über eine Kolbenstange mit einem konischen Spreizkörper starr verbunden ist. Ferner sind über die Führungsstangen Schraubendruckfedern gesteckt, die die Greifklauen im Sinne einer Verstellung radial nach innen belasten. Die Bewegung der Greifklauen nach radial außen erfolgt durch axiales Verstellen das konischen Spreizkörpers und die Bewegung der Greifklauen radial nach innen durch die auf die Führungsstangen gesteckten Schraubendruckfedern.

Aufgrund der einzelnen, um die Führungsstangen vorgesehenen Federelemente kann allerdings nicht gewährleistet werden, dass sämtliche Führungsstangen, mit den mit ihnen zusammenwirkenden Greifklauen, synchron radial nach innen bewegt werden. Es kann durchaus der Fall auftreten, dass eine Greifklaue in ihrer Führung und/oder am zu greifenden Gegenstand verhakt, so dass diese nicht zeitgleich mit den restlichen Greifklauen radial nach innen bewegt wird.

Dadurch, dass beim vorbekannten Stand der Technik der Kolben mit daran angeordneter Kolbenstange und auf der dem Zylinder abgewandten Seite der Kolbenstange vorgesehenem konischen Spreizkörper Verwendung findet, benötigt die vorbekannte Greifvorrichtung in axialer Richtung vergleichsweise viel Bauraum.

Aus der DE 89 04 108 U1 oder der US 5 871 250 A1 sind weitere gattungsgemäβe Greifvorrichtungen vorbekannt.

Der vorliegenden Erfindung liegt die Aufgabe zugrunde, eine Greifvorrichtung der eingangs genannten Art derart weiterzubilden, dass den beschriebenen Nachteilen abgeholfen wird. Insbesondere soll die Creifvorrichtung in axialer Richtung möglichst flach bauen.

Diese Aufgabe wird durch eine Greifvorrichtung mit den Merkmalen des Anspruchs 1 gelöst. Die Greifvorrichtung sieht folglich insbesondere vor, dass der Kolben eine sich in axialer Richtung erstreckende Führungshaube aufweist, die zur Führung des Kolbens mit einem in der Führungshaube liegenden, grundkörperseitigen Zapfen so zusammenwirkt, dass eine Kippbewegung des Kolbens im zylinder ausgeschlossen wird. Hierdurch wird erreicht, dass die Greifvorrichtung in axialer Richtung sehr flach bauen kann, da der Durchmesser des Kolbens aufgrund seiner Führung durch die Führungshaube und den Zapfen vergleichsweise groß sein kann. Die Führungshaube und der Zapfen verhindern bei großer Kolbenfläche ein ungewolltes Kippen oder Verkanten des Kolbens im Zylinder.

Der Zapfen liegt dabei innerhalb des Unterdruckraums beziehungsweise erstreckt sich durch diesen. Die Haubenführung ist dann auf der dem Druckraum zugewandten Seite zur Aufnahme des Zapfens offen ausgebildet. Auch hierdurch ergibt sich eine kompakte Bauform in axialer Richtung.

Vorzugsweise kann vorgesehen sein, dass zwischen der Haube und dem Grundkörper ein Federelement derart vorgesehen ist, dass beim Beaufschlagen des Unterdruckraums mit Unterdruck der Kolben entgegen der Federkraft des Federelements und beim Drucklosschalten des Unterdruckraums der Kolben in Richtung der Federkraft des Federelements bewegt wird. Die Führungshaube hat dann eine weitere Punktion; sie dient nicht nur zur Axialführung des Kolbens sondern auch zur Abstützung des zwischen dem Grundkörper und dem Kolben vorgesehenen Federelements. Das Federelement als solches dient zur Rückstellung beziehungsweise Rückführung des Kolbens beim Drucklosschalten des Druckraums. Anstelle oder zusätzlich zum Federelement kann der Kolben auch beidseitig druckbeaufschlagbar sein.

Insbesondere dann, wenn das Getriebe zwischen dem Kolben und den Führungsstangen derart ausgebildet ist, dass eine Zwangskopplung des Kolbens mit den Führungsstangen in beide Bewegungsrichtungen, also radial nach außen und innen, realisiert wird, kann über das Federelement eine synchrone Rückführbewegung der Führungsstangen beziehungsweise der an den Führungsstangen vorgesehenen Greifklauen gewährleistet werden.

Der Druckraum ist dabei ein Unterdruckraum, der zur Bewegung des Kolbens mit Unterdruck beaufschlagbar ist. Dies hat den Vorteil, dass die Greifvorrichtung auch in Reinräumen Verwendung finden kann, da dann, falls Abrieb am Kolben oder an dem zwischen dem Kolben und der Haube angeordneten Federelement, das vorzugsweise dann innerhalb des Unterdruckraums liegt, auftreten sollte, dieser über den Unterdruckraum abgesaugt wird. Vorteilhaft ist, wenn das Federelement derart angeordnet ist, dass aufgrund der Federkraft des Federelements die Führungsstangen samt Greifklauen radial nach innen gezogen werden und dass beim Unterdruckbeaufschlagen des Unterdruckraums die Führungsstangen samt Greifklauen nach radial außen bewegt werden. Hierdurch wird gewährleistet, dass ohne Anlegen eines Unterdrucks der zu greifende Gegenstand gegriffen wird. Der bereitzustellende Unterdruck wird lediglich beim Lösen des zu greifenden Gegenstands benötigt.

Vorteilhafterweise liegt die Längsachse des Zapfens in der Mittellängsachse des Unterdruckraums beziehungsweise des Zylinders. Dabei ist vorteilhaft, wenn lediglich ein Zapfen vorgesehen ist, der mit lediglich einer Führungshaube zusammenwirkt.

Vorteilhafterweise ist der Zapfen als Hohlzapfen ausgeführt, wobei das Federelement dann wenigstens abschnittsweise innerhalb des Zapfens angeordnet ist. Der Hohlzapfen bildet dabei eine Art Federbuchse zur Aufnahme des Federelements, die die Bewegung der Feder führt und ein ungewolltes Abknicken der Feder verhindert.

Die Führungshaube ist insbesondere topfartig mit einer einen zylindrischen Innenraum begrenzenden Innenwand und mit einer der offenen Seite gegenüberliegenden Bodenfläche ausgebildet. Dabei wirkt dann die Innenwand mit der Mantelfläche des Zapfens so zusammen, dass eine axiale Führung des Kolbens gewährleistet wird.

Ferner ist dann vorteilhaft, wenn das Federelement als Schraubenfeder ausgebildet ist und kolbenseitig gegen die Bodenfläche der topfartig ausgebildeten Führungshaube wirkt.

Die Federkraft des Federelements ist dabei vorzugsweise so gewählt, dass gewährleistet ist, dass sämtliche Führungsstangen mit Greifklauen ohne das Vorsehen weiterer Hilfsmittel mit ausreichender Kraft radial nach innen gezogen werden. Folglich ist dann nur ein Federelement vorzusehen, um sämtliche Führungsstangen mit Greifklauen in die Greiflage zu bewegen.

Das Getriebe sieht vorzugsweise auf der dem Unterdruckraum abgewandten Seite unmittelbar am Kolben schräg zur Mittellängsachse des Kolbens verlaufende Kopplungsabschnitte vor, die mit an den Führungsstangen vorgesehenen Eingriffsabschnitten zusammenwirken. Eine solche Ausführungsform gewährleistet insbesondere eine linear abhängige Bewegung des Kolbens zu den Bewegungen der Führungsstangen samt Greifklauen. Die Bewegungskopplung ist dabei derart, dass die Führungsstangen in beide Richtungen mit dem Kolben zwangsbewegungsgekoppelt sind.

Die Kopplungsmittel können dabei als Kopplungsstege und die Eingriffsabschnitte als Stegführungen ausgebildet sein. Jede Führungsstange sieht dann vorzugsweise eine den zugehörigen Kopplungssteg umgreifende oder umschließende Stegführung vor. Der Kopplungssteg kann dabei stiftartig ausgebildet sein, und die Stegführungen können eine hierzu komplementäre Ausbildung vorsehen.

Die Kopplungsstege können dabei in axialer Richtung nicht oder nur geringfügig über die Führungshauben überstehen. Ebenso kann vorgesehen sein, dass die Kopplungsstege in radialer Richtung nicht oder nur geringfügig über den Außenumfang des Kolbens überstehen. Hierdurch wird insbesondere eine sehr kompakte Bauweise realisiert.

Die Mittellängsachsen der Kopplungsstege schließen mit der Mittellängsachse des Kolbens insbesondere einen Winkel von 30° bis 65° und vorzugsweise im Bereich von 40° bis 50° ein. Hierdurch kann, insbesondere im Zusammenhang mit dem Maximalhub des Kolbens, eine geeignete Übersetzung realisiert werden. Da der Kolben aufgrund seiner Führung einen vergleichsweise großen Durchmesser vorsehen kann, und damit vergleichsweise hohe Kräfte zur Verfügung gestellt werden können, kann der Winkel zwischen den Kopplungsstegen und der Mittellängsachse des Kolbens vergleichsweise spitz ausfallen. Insgesamt ergibt sich hierdurch ebenfalls eine in Axialrichtung vergleichsweise flach bauende Greifvorrichtung.

Die Kopplungsstege sind insbesondere in Draufsicht auf den Kolben sternförmig radial nach außen ragend angeordnet. Wie bereits erwähnt, ist vorzugsweise für jede Führungsstange ein Kopplungssteg vorgesehen, der sich von der Mittellängsachse des Kolbens nach radial außen und in Richtung der dem Unterdruckraum abgewandten Seite erstreckt.

Der Kolben als solcher kann insbesondere als zweiteiliges Bauteil ausgebildet sein, das aus einem Kolbengrundteil und der Führungshaube besteht. Zudem kann am Kolben, insbesondere am radial äußeren Umfang, ein Dichtungselement zur Abdichtung des Unterdruckraums vorgesehen sein. Die kolbenseitigen Kopplungsabschnitte können dabei einstückig an dem Kolben angeformt sein oder als separate Bauteile am Kolben, beispielsweise durch Verschrauben, befestigt sein.

Weitere Vorteile und vorteilhafte Ausgestaltungen der Erfindung sind der nachfolgenden Beschreibung zu entnehmen, anhand derer das in den Figuren gezeigte Ausführungsbeispiel der Erfindung näher beschrieben und erläutert ist.

Es zeigen:
- Figur 1: eine perspektivische Draufsicht auf eine einen Gegenstand greifenden Greifvorrichtung;
- Figur 2: eine perspektivische Ansicht der Greifvorrichtung gemäß Figur 1 von unten;
- Figur 3: einen Längsschnitt durch die Greifvorrichtung gemäß Figur 1 in geöffnetem Zustand;
- Figur 4: die Greifvorrichtung gemäß Figur 3 beim Greifen eines Gegenstandes;
- Figur 5: die Greifvorrichtung gemäß Figur 3 in geschlossenem Zustand;
- Figur 6: eine Vergrößerung des Bereichs des Zylinders und Kolbens gemäß Figur 5; und
- Figur 7: eine Vergrößerung des Bereichs des Kolbens und Zylinders gemäß Figur 3.

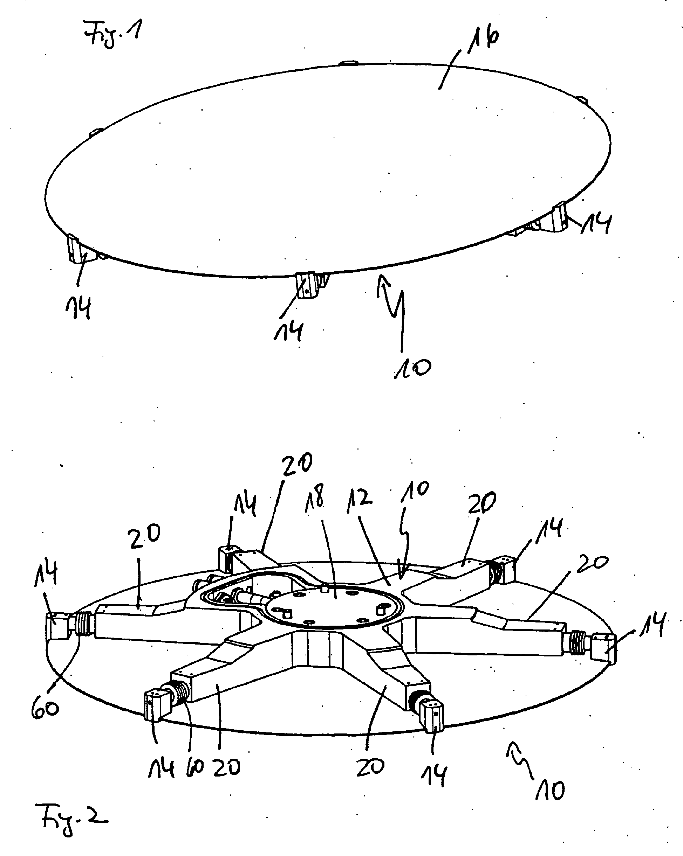

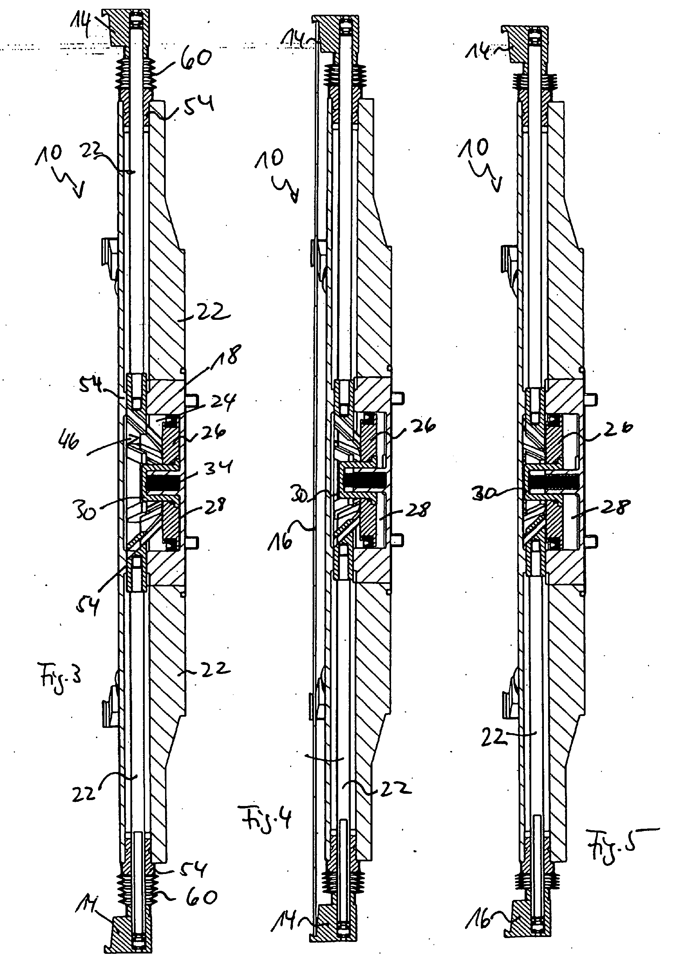

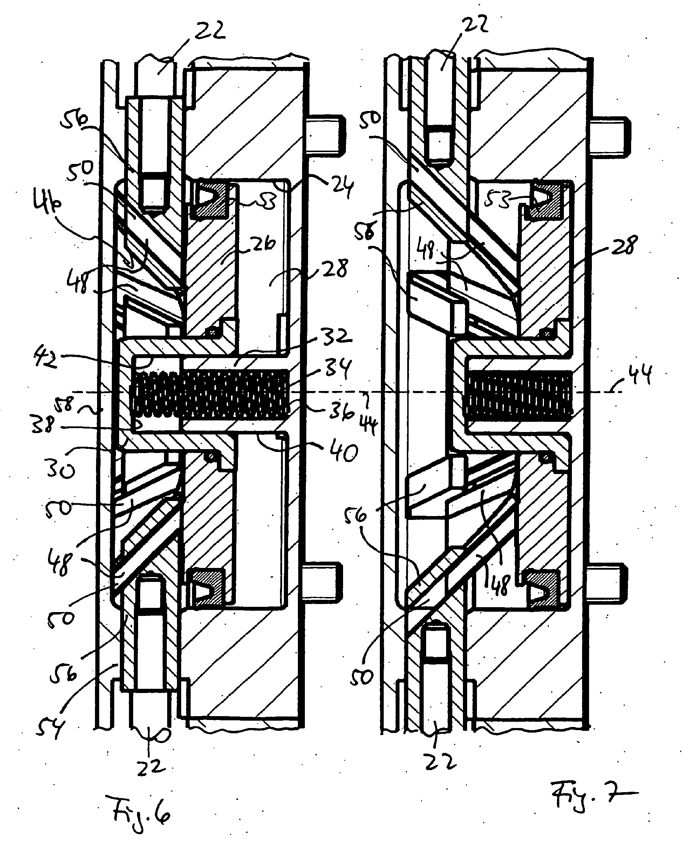

Die in den Figuren dargestellte Greifvorrichtung 10 umfasst einen Grundkörper 12 sowie relativ zum Grundkörper 12 radial nach außen und innen verschiebbar geführte Greifklauen 14. Wie insbesondere aus den Figuren 1 und 2 deutlich wird, wird mittels diesen Greifklauen ein scheibenförmiger Gegenstand 16 mit einem wenigstens annähernd kreisrunden Außenumfang gegriffen. Der Grundkörper 12 umfasst einen zentralen Bereich 18 sowie sich vom zentralen Bereich 18 nach radial außen erstreckende Arme 20. Innerhalb jedes Arms 20 ist eine Führungsstange 22, wie sie in den Figuren 3, 4 und 5 deutlich zu erkennen ist, verschieblich gelagert geführt. Um die starr mit den Führungsstangen 22 verbundenen Greifklauen 14 radial nach innen und außen zu verschieben, ist im zentralen Bereich 18 des Grundkörpers 12 ein in einem Zylinder 24 verschieblich angeordneter Kolben 26 vorgesehen. Wie insbesondere aus den Figuren 6 und 7 deutlich wird, begrenzt der Kolben 26 einen Unterdruckraum 28. Der Kolben 26 umfasst ferner eine Führungshaube 30, die zur Führung des Kolbens 26 mit einem in der Führungshaube 30 liegenden, grundkörperseitigen Zapfen 32 zusammenwirkt. Der Zapfen 32 ist innerhalb des Unterdruckraums 28 angeordnet und ist hohl ausgebildet. Im Zapfen 32 befindet sich ein Federelement 34, das sich einerends am Boden 36 des hohl ausgebildeten Zapfens 32, und damit am Grundkörper 12, und andererends an der Führungshaube 30 beziehungsweise deren Bodenfläche 38 abstützt. Die außen liegende Mantelfläche 40 des Zapfens 32 wirkt zur Führung des Kolbens 26 mit der Innenwand 42 der Führungshaube 30 derart zusammen, dass trotz der vergleichsweise großen Kolbenfläche des Kolbens 26 ein ungewolltes Kippen oder Verkanten des Kolbens 26 im Zylinder 28 unterbunden wird.

Beim Beaufschlagen des Unterdruckraums 28 mit Unterdruck wird folglich der Kolben 26 aus der in der Figur 6 dargestellten Lage in die in die Figur 7 dargestellte Lage entgegen der Federkraft des Federelements 34 bewegt. Wird der Unterdruckraum 28 drucklos geschalten, so bewegt sich aufgrund der Federkraft des Federelements 34 der Kolben aus der in der Figur 7 dargestellten Öffnungslage in die in der Figur 6 dargestellte Greiflage.

Die Mittellängsachse des Zapfens 32, des Federelements 34, des Haubenteils 30, des Kolbens 26 und des Zylinders 28 liegen dabei auf einer Linie 44.

Zur Umlenkung der Axialbewegung des Kolbens 26 in die Radialbewegung der Führungsstangen 22 ist zwischen dem Kolben 26 und den Führungsstangen 22 ein Getriebe 46 vorgesehen. Das Getriebe 46 umfasst auf der dem Unterdruckraum 28 abgewandten Seite des Kolbens schräg zur Achse 44 nach radial außen verlaufende Kopplungsabschnitte in Form von Kopplungsstegen 48, die insbesondere einstückig mit dem Kolben 26 ausgebildet sind. Die Kopplungsstege 48 können einen wenigstens weitgehend kreisrunden oder rechteckigen Querschnitt vorsehen. Die Kopplungsstege 48 wirken mit an den der Achse 44 zugewandten Enden der Führungsstangen 22 vorgesehenen Eingriffsabschnitten in Form von Stegführungen 50, die als Aussparungen ausgebildet sein können, zusammen. Die Achse des jeweiligen Kopplungsabschnitts 48 liegt dabei in der Achse der jeweils ihm zugehörigen Stegführung 50. Wie insbesondere aus den Figuren 6 und 7 deutlich wird, schließen die Achsen der Kopplungsstege 48 mit der Achse 44 einen Winkel von cirka 45° ein. Ferner wird aus Figur 6 und 7 deutlich, dass die Kopplungsstege 48 in axialer Richtung nur sehr geringfügig über die Führungshaube 30 überstehen und in radialer Richtung den Außenumfang des Kolbens 26 nicht überragen.

Insgesamt wird hierdurch ein sehr flach bauendes Getriebe 46 realisiert, welches die Axialbewegung des Kolbens in die Radialbewegungen der Führungsstangen 22 mit den daran angeordneten Greifklauen 14 überführt.

Zur einfacheren Fertigung des Kolbens 26 ist der Kolben 26 zweiteilig ausgebildet. Zum einen umfasst er ein Kolbengrundteil 52 und zum anderen die Führungshaube 30. Am Kolben kann zudem ein Dichtungselement 53 angeordnet sein.

Die Funktionsweise der in den Figuren dargestellten Greifvorrichtung 10 ist wie folgt: Zum Öffnen der Greifvorrichtung 10 wird der Unterdruckraum 28, wie in Figur 3 und 7 dargestellt, mit Unterdruck beaufschlagt. Hierdurch wird der Kolben 26 in seine eine Hubendlage überführt. Aufgrund der Bewegungskopplung des Kolbens 26 über die Kopplungsstege 48 und Führungsstege 50 mit den Führungsstangen 22 werden dadurch die Führungsstangen radial nach außen bewegt. Zur Führung der Führungsstangen 22 im Grundkörper 12 beziehungsweise in den Armen 20 sind hierzu geeignete Führungsabschnitte 54 vorgesehen. Die Greifvorrichtung 10 kann dann den zu greifenden Gegenstand 16 aufnehmen.

Beim Drucklosschalten des Unterdruckraums 28 bewegt sich aufgrund des Federelements 34 der Kolben 26 in axialer Richtung, bis die in Figur 4 erreichte Lage erreicht ist. Der Gegenstand 16 ist dann gegriffen. Dadurch, dass die Bewegung des Kolbens 26 über die Kopplungsstege 48 und die Stegführungen 50 zwangsgeführt ist, bewegen sich beim Verschieben des Kolbens 26 die Führungsstangen 22 synchron. Ein Kippen oder Verkanten des Kolbens 26 im Zylinder 28 wird durch die vom Haubenteil 30 und dem Zapfen 32 gebildete Führung unterbunden.

Soll der gegriffene Gegenstand 16 freigegeben werden, so wird der Unterdruckraum 28 mit Unterdruck beaufschlagt, wodurch das Federelement 34 entgegen seiner Federkraft zusammengedrückt wird und der Kolben 26 die in Figur 3 beziehungsweise Figur 7 gezeigte Lage einnimmt.

Wird der Unterdruckraum 26 drucklos geschalten, ohne dass ein zu greifender Gegenstand 16 zwischen den Greifklauen vorhanden ist, so nimmt der Kolben 26 seine den Führungsstangen 22 beziehungsweise Stegführungen 50 zugewandte Hubendlage ein. Diese Hubendlage kann beispielsweise, wie aus Figur 6 deutlich wird, durch Anschlagen des Kolbens 26 an den die Stegführungen 50 vorsehenden Abschnitte 56 der Führungsstangen 22 und/oder der Führungshaube 30 an einem ihr zugewandten Abschnitt 58 des Grundkörpers 12, definiert sein.

Die Federkraft des Federelements 34 ist derart gewählt, dass der zu greifende Gegenstand 16 mit einer ausreichenden Greifkraft von den Greifklauen 22 gehalten wird. Weitere Federelemente, insbesondere auf die Führungsstangen 22 aufgesteckte Federelemente, sind nicht erforderlich.

Wie aus den Figuren 3, 4 und 5 deutlich wird, sind zwischen den Armen 20 beziehungsweise den Führungsabschnitten 54 und den Greifklauen 22 Balgdichtungen 60 vorgesehen.

## Patentansprüche

1. Greifvorrichtung (10) zum Greifen scheibenförmiger Gegenstände (16) mit wenigstens annähernd kreisrundem Außenumfang, mit einen Grundkörper (12), mit relativ zum Grundkörper (12) radial nach innen und außen verschiebbar geführten Greifklauen (14) zur Anlage an den Außenumfang des zu greifenden Gegenstands (16), wobei im Grundkörper (12) ein axial verlaufend angeordneter Zylinder (24) mit einem darin verschieblich geführten, einen Druckraum begrenzenden Kolben (26) vorgesehen ist, der über ein die Axialbewegung des Kolbens (26) in Radialbewegungen umwandelndes Getriebe (46) und über mit dem Getriebe (46) zusammenwirkende Führungsstangen (22) mit den Greifklauen (14) bewegungsgekoppelt ist, **dadurch gekennzeichnet, dass** der Druckraum ein Unterdruckraum (28) ist, dass der Kolben (26) eine sich in axialer Richtung erstreckende Führungshaube (30) aufweist, die zur Führung des Kolbens (26) mit einem in der Führungshaube (30) liegenden, grundkörperseitigen Zapfen (32) zusammenwirkt, wobei der zapfen (32) innerhalb des Unterdruckraums (28) liegt und sich durch den Unterdruckraum (28) erstreckt und dass die Führungshaube (30) sich durch den Kolben hindurch erstreckt und auf der dem Unterdruckraum (28) zugewandten Seite zur Aufnahme des Zapfens (32) offen ausgebildet ist.

2. Greifvorrichtung (10) nach Anspruch 1, **dadurch gekennzeichnet, dass** zwischen der Führungshaube (30) und dem Grundkörper (12) ein Federelement (34) derart vorgesehen ist, dass beim Beaufschlagen des Unterdruckraums (28) mit Unterdruck der Kolben (26) entgegen der Federkraft des Federelements (34) und beim Crucklosschalten des Unterdruckraums (28) der Kolben (26) in Richtung der Federkraft des Federelements (34) bewegt wird.

3. Greifvorrichtung (10) nach Anspruch 1 oder 2, **dadurch gekennzeichnet, dass** das Getriebe zwischen dem Kolben und den Führungsstangen derart ausgebildet ist, dass eine Zwangskopplung des Kolbens mit den Führungsstangen in beide Bewegungsrichtungen radial nach außen und innen realisiert wird.

4. Greifvorrichtung (10) nach einem der vorherigen Ansprüche, **dadurch gekennzeichnet, dass** das Federelement (34) derart angeordnet ist, dass aufgrund der Federkraft des Federelements (34) die Führungsstangen (22) samt Greifklauen (14) radial nach innen gezogen werden und dass beim unterdruckbeaufschlagen des Unterdruckraums (28) die Führungsstangen (22) samt Greifklauen (14) radial nach außen bewegt werden.

5. Greifvorrichtung (10) nach einem der vorhergehenden Ansprüche, **dadurch gekennzeichnet, dass** die Längsachse des Zapfens (32) in der Mittellängsachse (44) des Unterdruckraums (28) liegt.

6. Greifvorrichtung (10) nach einem der vorherigen Ansprüche, **dadurch gekennzeichnet, dass** der Zapfen (32) als Hohlzapfen ausgeführt ist und dass das Federelement (34) wenigstens abschnittsweise innerhalb des Zapfens (32) angeordnet ist.

7. Greifvorrichtung (10) nach einem der vorhergehenden Ansprüche, **dadurch gekennzeichnet, dass** die Führungshaube (30) topfartig mit einer einen zylindrischen Innenraum begrenzenden Innenwand (42) und mit einer der offenen Haubenseite gegenüberliegende Bodenfläche (38) ausgebildet ist.

8. Greifvorrichtung (10) nach einem der vorherigen Ansprüche, **dadurch gekennzeichnet, dass** das Federelement (34) als Schraubenfeder ausgebildet ist, deren eines Ende sich am Kolben (26) oder an der Führungshaube (30) des Kolbens (26) und deren anderes Ende sich am Grundkörper (12) abstützt.

9. Greifvorrichtung (10) nach einem der vorherigen Ansprüche, **dadurch gekennzeichnet, dass** das Federelement (34) eine Federkraft aufweist, aufgrund derer gewährleistet ist, dass sämtliche Führungsstangen (22) mit Greifklauen (14) ohne das Vorsehen weiterer Hilfsmittel mit ausreichender Kraft radial nach innen gezogen werden.

10. Greifvorrichtung (10) nach einem der vorhergehenden Ansprüche, **dadurch gekennzeichnet, dass** das Getriebe (46) auf der dem Unterdruckraum (28) abgewandter Seite unmittelbar am Kolben (26) schräg zur Mittellangsachse (44) des Kolbens (26) verlaufende Kopplungsabschnitte umfasst, die mit an den Führungsstangen (22) vorgesehenen Eingriffabschnitzen zusammenwirken.

11. Greifvorrichtung (10) nach Anspruch 10, **dadurch gekennzeichnet, dass** die Kopplungsabschnitte als Kopplungsstege (48) und die Eingriffsabschnitte als Stegführungen (50) ausgebildet sind.

12. Greifvorrichtung (10) nach Anspruch 11, **dadurch** gekennzeichet, dass die Kopplungsstege (48) in axialer Richtung nicht oder nur geringfügig über die Führungshaube (30) überstehen und/oder dass die Kopplungestege (48) in radialer Richtung nicht oder nur geringfügig über den Außenumfang des Kolbens (26) überstehen.

13. Greifvorrichtung (10) nach Anspruch 11 oder 12, **dadurch gekennzeichnet, dass** die Mittellängsachse (44) der Kopplungsstege (48) mit der Mittellängsachse (44) des Kolbens (26) einen Winkel im Bereich von 30° bis 60° und insbesondere im Bereich von 40° bis 50° einschließen.

14. Greif Vorrichtung (10) nach Anspruch 11, 12 oder 13, **dadurch gekennzeichnet, dass** die Kopplungsstege (48) in Draufsicht auf den Kolben (26) sternartig radial nach außen ragend angeordnet sind.

15. Greifvorrichtung (10) nach einem der vorergehenden Ansprüche, **dadurch gekennzeichnet, dass** der Kolben (26) als zweiteiliges Bauteil ausgebildet ist, das aus einem Kolbengrundteil (52) und der Führungshaube (30) besteht.

## Claims

1. A gripping device (10) for gripping disk-shaped objects (16) that have an at least approximately circular outer circumference, having a basic body (12), having gripping claws (14), guided displaceably radially inward and outward relative to the basic body (12), for contact with the outer circumference of the object (16) to be gripped, in which in the basic body (12) an axially extending cylinder (24) with a piston (26), guided displaceably in it and defining a pressure chamber, is provided, which piston is motion-coupled with the gripping claws (14) via a gear (46) that converts the axial motion of the piston (26) into radial motions and via guide rods (22) cooperating with the gear (46), **characterized in that** the pressure chamber is a underpressure chamber (28); that the piston (26) has a guide hood (30) extending in the axial direction, which hood, for guiding the piston (26), cooperates with a peg (32) located, on the side toward the basic body, in the guide hood (30), and the peg (32) is located inside the underpressure chamber (28) and extends through the underpressure chamber (28); and that the guide hood (30) extends through the piston and, on the side toward the underpressure chamber (28), is open, for receiving the peg (32).

2. The gripping device (10) as defined by claim 1, **characterized in that** between the guide hood (30) and the basic body (12), a spring element (34) is provided, such that when the underpressure chamber (28) is subjected to underpressure, the piston (26) is moved counter to the spring force of the spring element (34), and when the underpressure chamber (28) is switched to be pressureless, the piston (26) is moved in the direction of the spring force of the spring element (34).

3. The gripping device (10) as defined by claim 1 or 2, **characterized in that** the gear between the piston and the guide rods is embodied such that a forced coupling of the piston to the guide rods in both directions of motion radially outward and inward is realized.

4. The gripping device (10) as defined by one of the foregoing claims, **characterized in that** the spring element (34) is disposed such that because of the spring force of the spring element (34), the guide rods (22) together with the gripping claws (14) are drawn radially inward; and that when the underpressure chamber (28) is subjected to underpressure, the guide rods (22) together with the gripping claws (14) are moved radially outward.

5. The gripping device (10) as defined by one of the foregoing claims, **characterized in that** the longitudinal axis of the peg (32) is located in the center longitudinal axis (44) of the underpressure chamber (28).

6. The gripping device (10) as defined by one of the foregoing claims, **characterized in that** the peg (32) is embodied as a hollow peg; and that the spring element (34) is disposed at least in some portions inside the peg (32).

7. The gripping device (10) as defined by one of the foregoing claims, **characterized in that** the guide hood (30) is embodied in cuplike fashion, with an inner wall (42) defining a cylindrical inner chamber, and with a bottom face (38) facing the open side of the hood.

8. The gripping device (10) as defined by one of the foregoing claims, **characterized in that** the spring element (34) is embodied as a helical spring, one end of which is braced on the piston (26) or on the guide hood (30) of the piston (26), and the other end of which is braced on the basic body (12).

9. The gripping device (10) as defined by one of the foregoing claims, **characterized in that** the spring element (34) has a spring force on the basis of which force it is ensured that all the guide rods (22) with gripping claws (14) are drawn radially inward, with adequate force, without the provision of further other means.

10. The gripping device (10) as defined by one of the foregoing claims, **characterized in that** the gear (46), on the side facing away from the underpressure chamber (28), includes coupling portions, which extend directly on the piston (26) obliquely to the center longitudinal axis (44) of the piston (26) and which cooperate with engagement portions provided on the guide rods (22).

11. The gripping device (10) as defined by claim 10, **characterized in that** the coupling means are embodied as coupling ribs (48), and the engagement portions are embodied as rib guides (50).

12. The gripping device (10) as defined by claim 11, **characterized in that** the coupling ribs (48) do not protrude, or protrude only slightly, past the guide hood (30) in the axial direction; and/or that the coupling ribs (48) do not protrude, or protrude only slightly, past the outer circumference of the piston (26) in the radial direction.

13. The gripping device (10) as defined by claim 11 or 12, **characterized in that** the center longitudinal axis (44) of the coupling ribs (48) and the center longitudinal axis (44) of the piston (26) form an angle in the range from 30° to 60°, and in particular in the range from 40° to 50°.

14. The gripping device (10) as defined by claim 11, 12 or 13, **characterized in that** the coupling ribs (48), in plan view on the piston (26), are disposed protruding in starlike fashion radially outward.

15. The gripping device (10) as defined by one of the foregoing claims, **characterized in that** the piston (26) is embodied as a two-piece component, which comprises a basic piston part (52) and the guide hood (30).

## Revendications

1. Dispositif de préhension (10) destiné à saisir des objets (16) en forme de disque comportant au moins une périphérie extérieure approximativement circulaire, un corps de base (12), des griffes de préhension (14) guidées de façon à pouvoir être déplacées radialement vers l'intérieur et l'extérieur par rapport au corps de base (12) pour prendre appui à la périphérie extérieure de l'objet (16) à saisir, dans lequel un cylindre (24) s'étendant axialement comportant un piston (26) guidé de façon à pouvoir être déplacé à l'intérieur, limitant une chambre à pression est prévu dans le corps de base (12), lequel cylindre est accouplé au mouvement avec les griffes de préhension (14) par l'intermédiaire d'un engrenage (46) transformant en mouvement radiaux le mouvement axial du piston (26) et des tiges de guidage (22) coopérant avec l'engrenage (46), **caractérisé en ce que** la chambre à pression est une chambre à dépression (28), le piston (26) présente une jupe de guidage (30) s'étendant dans la direction axiale qui coopère avec un tourillon (32), côté corps de base, se trouvant dans la jupe de guidage (30), le tourillon (32) se trouvant à l'intérieur de la chambre à dépression (28) et s'étendant à travers la chambre à dépression (28) et **en ce que** la jupe de guidage (30) s'étend à travers tout le piston et est formée ouverte sur le côté opposé à la chambre à dépression (28) pour loger le tourillon (32).

2. Dispositif de préhension (10) selon la revendication 1, **caractérisé en ce qu'**un élément à ressort (34) est prévu entre la jupe de guidage (30) et le corps de base (12) de telle manière qu'en créant une dépression dans la chambre à dépression (28), le piston (26) de la chambre à dépression (28) est animé d'un mouvement dans le sens inverse de la tension du ressort de l'élément à ressort (34) et le piston est animé d'un mouvement dans le sens de la tension du ressort de l'élément à ressort (34) en créant une dépression dans la chambre à dépression (28).

3. Dispositif de préhension (10) selon la revendication 1 ou 2, **caractérisé en ce que** l'engrenage entre le piston et les tiges de guidage est formé de telle manière qu'un accouplement forcé du piston avec les tiges de guidage est réalisé dans les deux sens de déplacement radialement vers l'extérieur et l'intérieur.

4. Dispositif de préhension (10) selon l'une quelconque des revendications précédentes, **caractérisé en ce que** l'élément à ressort (34) est agencé de telle manière que les tiges de guidage (22) y compris les griffes de préhension (14) sont tirées radialement vers l'intérieur en raison de la tension du ressort de l'élément à ressort (34), et **en ce que** les tiges de guidage (22) y compris les griffes de préhension (14) sont animées d'un mouvement radialement vers l'extérieur en créant une dépression dans la chambre à dépression (28).

5. Dispositif de préhension (10) selon l'une quelconque des revendications précédentes, **caractérisé en ce que** l'axe longitudinal du tourillon (32) se situe dans l'axe longitudinal central (44) de la chambre à dépression (28).

6. Dispositif de préhension (10) selon l'une quelconque des revendications précédentes, **caractérisé en ce que** le tourillon (32) est réalisé sous la forme d'un tourillon creux et **en ce que** l'élément à ressort (34) est agencé au moins partiellement dans le tourillon (32).

7. Dispositif de préhension (10) selon l'une quelconque des revendications précédentes, **caractérisé en ce que** la jupe de guidage (30) est réalisée en forme de coupelle comportant une paroi intérieure (42) limitant un espace intérieur cylindrique et une surface (38) opposée au côté ouvert de la jupe.

8. Dispositif de préhension (10) selon l'une quelconque des revendications précédentes, **caractérisé en ce que** l'élément à ressort (34) est réalisé sous la forme d'un ressort cylindrique dont une extrémité est en appui contre le piston (26) ou la jupe de guidage (30) du piston (26) et dont l'autre extrémité est en appui contre le corps de base (12).

9. Dispositif de préhension (10) selon l'une quelconque des revendications précédentes, **caractérisé en ce que** l'élément à ressort (34) présente une tension de ressort en raison de laquelle il est garanti que toutes les tiges de guidage (22) sont tirées radialement vers l'intérieur avec une force suffisante avec les griffes de préhension (14) sans que d'autres moyens de secours soient prévus.

10. Dispositif de préhension (10) selon l'une quelconque des revendications précédentes, **caractérisé en ce que** l'engrenage (46) situé sur le côté opposé à la chambre à dépression (28) comprend des parties d'accouplement s'étendant directement sur le piston (26) en étant orientés obliquement à l'axe longitudinal central (44) du piston (26) qui coopèrent avec des parties d'engrènement prévues sur les tiges de guidage (22).

11. Dispositif de préhension (10) selon la revendication 10, **caractérisé en ce que** les parties d'accouplement sont réalisés sous la forme d'entretoises d'accouplement (48) et les parties d'engrènement sous la forme de passage d'entretoise (50).

12. Dispositif de préhension (10) selon la revendication 11, **caractérisé en ce que** les entretoises d'accouplement (48) dans la direction axiale ne font pas saillie ou seulement légèrement au-dessus de la jupe de guidage (30) et/ou **en ce que** les entretoises d'accouplement (48) dans la direction radiale ne font pas saillie ou seulement légèrement au-dessus de la périphérie extérieure du piston (26).

13. Dispositif de préhension (10) selon la revendication 11 ou 12, **caractérisé en ce que** l'axe longitudinal central (44) des entretoises d'accouplement (48) avec l'axe longitudinal central (44) du piston (26) comporte un angle dans la plage de 30° à 60° et notamment dans la plage de 40° à 50°.

14. Dispositif de préhension (10) selon la revendication 11, 12 ou 13, **caractérisé en ce que** les entretoises d'accouplement (48) sont agencées, en vue de dessus sur le piston (26), en se dressant en forme d'étoile radialement vers l'extérieur.

15. Dispositif de préhension (10) selon l'une quelconque des revendications précédentes, **caractérisé en ce que** le piston (26) est réalisé sous la forme d'un composant en deux parties qui est constitué d'une partie de base du piston (52) et de la jupe de guidage (30).
